# EUROPEAN PATENT APPLICATION

(11) **EP 2 916 584 A1**
(43) Date of publication of application: **09.09.2015**
(21) Application number: 12888948.2
(22) Date of filing: 23.11.2012
(51) Int. Cl.: H04W 28/16, H04W 88/10

(54) **INTER-NETWORK COOPERATION METHOD, COOPERATIVE NODE AND NETWORK-SIDE DEVICE**

(71) Applicant: Huawei Technologies Co., Ltd., Longgang District Shenzhen, Guangdong 518129 (CN)
(72) Inventor: JI, Xiaojun, Shenzhen Guangdong 518129 (CN); WANG, Wei, Shenzhen Guangdong 518129 (CN); ZHU, Haobing, Shenzhen Guangdong 518129 (CN)
(74) Representative: Pfenning, Meinig & Partner GbR
(86) International application number: PCT/CN2012/085184
(87) International publication number: WO 2014/079049

(57) **Abstract**

The present invention discloses an inter-network collaboration method, a collaboration node, and a network side device. The method includes: obtaining status information of cells of different standards, where the status information indicates at least one of a radio resource status, terminal distribution, and a service condition of the cells of the different standards; and sending, according to the status information, coordination indication information to base stations or base station controllers of the cells of the different standards, so that the base stations or the base station controllers perform an inter-network collaboration operation according to the coordination indication information. The inter-network collaboration method, the collaboration node, and the network side device according to embodiments of the present invention can maximize a utilization rate of wireless network resources and therefore improve network performance.

## Description

### TECHNICAL FIELD

The present invention relates to the field of communications, and in particular, to a method, a collaboration node, and a network side device for inter-network collaboration.

### BACKGROUND

With large-scale application of mobile intelligent terminals and an ever-increasing demand for wireless communication bandwidths, the field of wireless communications gradually introduces new communication standards and networking morphologies. More and more operators form a posture of parallel operation of multi-standard and macro-micro multi-layer networks, including a Global System for Mobile Communications (Global System of Mobile communication, "GSM" for short), a Universal Mobile telecommunications System (Universal Mobile Telecommunication System, "UMTS" for short), and a Long Term Evolution (Long Term Evolution, "LTE" for short). Different from a three-layer architecture of GSM and UMTS, in a flat architecture of LTE, a central control node, namely, a base station controller is cancelled. Therefore, on one hand, an X2 interface needs to be introduced for coordination between LTE base stations, which causes the number of connections between single base stations of LTE to increase for more than five times, but resources still cannot be optimized at a network layer; on the other hand, a resource use status cannot be effectively exchanged between LTE, GSM and UMTS, which also limits performance optimization and capacity maximization of one network with GSM, UMTS and LTE; in a macro-micro networking scenario of a hotspot area, a small station is mainly deployed in a multi-layer coverage area of macro networks, and effective coordination needs to be performed between a plurality of small stations and multi-layer macro networks, so as to improve network capacity and terminal customer experience most effectively.

In the prior art, resource and status information is exchanged through an X2 interface between evolved base stations (Evolutional Node B, "eNodeB" for short) of LTE, so as to coordinate radio resources between eNodeBs for optimized use; radio resource and status information is exchanged through a radio access network (Radio Access Network, "RAN" for short) information management (RAN Information Management, "RIM" for short) signaling interface between LTE and GSM and UMTS, and radio resource and status information is exchanged through an Iur-G between GSM and UMTS, so as to perform resource use coordination and optimization through these interfaces. To perform radio resource coordination through the X2 interface between LTE eNodeBs, a large number of X2 interfaces need to be configured for each eNodeB, causing that effectiveness of resource coordination greatly depends on accuracy and effectiveness of X2 interface configuration; on the other hand, because each eNodeB is not only an information publisher but also a convergence analysis entity of information, information exchange is complex, and coordination is difficult. Cell-level signaling transmission is mainly performed between LTE and GSM and UMTS by using RIM messages, and LTE eNodeBs obtain conditions of GSM and UMTS network resources, so as to perform resource coordination analysis and judgment; signaling transmission is performed between GSM and UMTS through the Iur-G interface of a controller, so as to perform resource coordination analysis and judgment of GSM and UMTS within the controller; and resource coordination analysis and judgment are separately performed between LTE, GSM and UMTS by using different entities in different architectures. After status exchange, the standards make evaluation separately and therefore cannot know a trend and instant changes of an entire network on a unified node, resulting in a case in which a single standard is optimal but the entire network is not optimal and network resources cannot be fully used to improve network performance and user experience. Radio resource status is exchanged through a core network and resource coordination is not implemented in a wireless network, forming tight coupling between the core network and the wireless network, which brings more uncertain factors in version update and is not good to stability of a network.

### SUMMARY

Embodiments of the present invention provide a method, a collaboration node, and a network side device for inter-network collaboration, which can improve network performance.

According to a first aspect, an inter-network collaboration method is provided, including: obtaining status information of cells of different standards, where the status information indicates at least one of a radio resource status, terminal distribution, and a service condition of the cells of the different standards; and sending, according to the status information, coordination indication information to base stations or base station controllers of the cells of the different standards, so that the base stations or the base station controllers perform an inter-network collaboration operation according to the coordination indication information.

In a first possible implementation manner, the obtaining status information of cells of different standards includes: receiving the status information periodically sent by the base stations or the base station controllers, or receiving the status information that is sent by the base stations or the base station controllers when a radio resource status changes, or sending a request message for requesting the status information to the base stations or the base station controllers, and receiving the status information sent, by responding to the request message, by the base stations or the base station controllers.

In a second possible implementation manner, with reference to the first aspect or the first possible implementation manner of the first aspect, before the obtaining status information of cells of different standards, the method further includes: finding the base stations or the base station controllers and establishing a connection with the base stations or the base station controllers.

In a third possible implementation manner, with reference to the first aspect or the first or the second possible implementation manner of the first aspect, the coordination indication information includes at least one of a neighboring cell parameter, a handover threshold, a camping parameter, a power parameter, and a load threshold; and the sending, according to the status information, the coordination indication information to the base stations or the base station controllers of the cells of the different standards, includes: if a utilization rate of radio resources of the cells of the different standards reaches a first preset threshold, sending the coordination indication information to the base stations or the base station controllers.

In a fourth possible implementation manner, with reference to the first aspect or the first or the second possible implementation manner of the first aspect, the coordination indication information includes at least one of a physical cell identity PCI (Physical Cell ID, "PCI" for short) of an evolved base station eNodeB, a random access channel RACH (Random Access Channel, "RACH" for short) sequence of an eNodeB, a neighboring cell parameter, a handover threshold, a camping parameter, a power parameter, and a load threshold; and the sending, according to the status information, the coordination indication information to the base stations or the base station controllers of the cells of the different standards, includes: if a utilization rate of radio resources of a long term evolution LTE cell reaches a second preset threshold, sending the coordination indication information to eNodeBs.

In a fifth possible implementation manner, with reference to the first aspect or the first or the second possible implementation manner of the first aspect, the sending, according to the status information, coordination indication information to base stations or base station controllers of the cells of the different standards includes: sending, according to at least one of a radio resource status, a user priority, and a service type of the cells of the different standards, a service bearer adjusting indication to the base stations or the base station controllers, so that the cells of the different standards adjust service bearers.

In a sixth possible implementation manner, with reference to the first aspect or the first or the second possible implementation manner of the first aspect, the sending, according to the status information, coordination indication information to base stations or base station controllers of the cells of the different standards includes: sending, according to load information of cells in an LTE system, frequency resources used by edge users to a base station of a cell, of which load is higher than a preset threshold.

In a seventh possible implementation manner, with reference to the first aspect or the first or the second possible implementation manner of the first aspect, the sending, according to the status information, coordination indication information to base stations or base station controllers of the cells of the different standards includes: sending, according to load conditions of the cells of the different standards, indication information of shutting down cells of a part of frequency points or cells of a part of standards to the base stations or the base station controllers, or sending indication information of starting shut-down cells to the base stations or the base station controllers.

In an eighth possible implementation manner, with reference to the first aspect or the first or the second possible implementation manner of the first aspect, the sending, according to the status information, coordination indication information to base stations or base station controllers of the cells of the different standards includes: sending, according to user service conditions of macro base stations and micro base stations of an LTE system, almost blank subframe (Almost Blank Sub-Frame, "ABS" for short) configuration information to the macro base stations or the micro base stations.

In a ninth possible implementation manner, with reference to the first aspect or the first or the second possible implementation manner of the first aspect, the sending, according to the status information, coordination indication information to base stations or base station controllers of the cells of the different standards includes: sending, according to a PCI conflict condition of cells in an LTE system, a non-conflict PCI to a base station of a PCI-conflicting cell.

In a tenth possible implementation manner, with reference to the first aspect or any one of the first to the ninth possible implementation manners of the first aspect, the method further includes: configuring a GSM or UMTS neighboring cell relationship according to an LTE neighboring cell relationship; or configuring a UMTS or LTE neighboring cell relationship according to a GSM neighboring cell relationship; or configuring a GSM or LTE neighboring cell relationship according to a UMTS neighboring cell relationship.

According to a second aspect, an inter-network collaboration method is provided, including: receiving coordination indication information sent by a collaboration node, where the coordination indication information is determined by the collaboration node according to status information of cells of different standards, and the status information indicates at least one of a radio resource status, terminal distribution, and a service condition of the cells of the different standards; and performing an inter-network collaboration operation according to the coordination indication information.

In a first possible implementation manner, before the receiving coordination indication information sent by a collaboration node, the method further includes: periodically sending the status information to the collaboration node; or sending the status information to the collaboration node when a radio resource status changes; or receiving a request message for requesting the status information, which is sent by the collaboration node, and sending, by responding to the request message, the status information to the collaboration node.

In a second possible implementation manner, with reference to the second aspect or the first possible implementation manner of the second aspect, before the receiving coordination indication information sent by a collaboration node, the method further includes: finding the collaboration node and establishing a connection with the collaboration node.

In a third possible implementation manner, with reference to the second aspect or the first or the second possible implementation manner of the second aspect, the coordination indication information includes at least one of a neighboring cell parameter, a handover threshold, a camping parameter, a power parameter, and a load threshold; and the receiving coordination indication information sent by a collaboration node includes: receiving, by base stations or base station controllers of the cells of the different standards, the coordination indication information, which is sent by the collaboration node when a utilization rate of radio resources of the cells of the different standards reaches a first preset threshold.

In a fourth possible implementation manner, with reference to the second aspect or the first or the second possible implementation manner of the second aspect, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; and the receiving coordination indication information sent by a collaboration node includes: receiving, by eNodeBs, the coordination indication information, which is sent by the collaboration node when a utilization rate of radio resources of a long term evolution LTE cell reaches a second preset threshold.

In a fifth possible implementation manner, with reference to the second aspect or the first or the second possible implementation manner of the second aspect, the coordination indication information includes a service bearer adjusting indication that is determined by the collaboration node according to at least one of a radio resource status, a user priority, and a service type of the cells of the different standards; and the performing an inter-network collaboration operation according to the coordination indication information includes: adjusting service bearers according to the coordination indication information.

In a sixth possible implementation manner, with reference to the second aspect or the first or the second possible implementation manner of the second aspect, the coordination indication information includes frequency resources used by edge users and determined, according to load information of cells in an LTE system, by the collaboration node for a cell, of which load is higher than a preset threshold.

In a seventh possible implementation manner, with reference to the second aspect or the first or the second possible implementation manner of the second aspect, the coordination indication information includes indication information of shutting down cells of a part of frequency points or cells of a part of standards, or indication information of starting shut-down cells sent by the collaboration node according to load conditions of the cells of the different standards.

In an eighth possible implementation manner, with reference to the second aspect or the first or the second possible implementation manner of the second aspect, the coordination indication information includes almost blank subframe ABS configuration information that is determined by the collaboration node according to user service conditions of macro base stations and micro base stations of an LTE system.

In a ninth possible implementation manner, with reference to the second aspect or the first or the second possible implementation manner of the second aspect, the coordination indication information includes a non-conflict PCI that is determined by the collaboration node according to a PCI conflict condition of cells in an LTE system.

According to a third aspect, a collaboration node is provided, including: an obtaining module, configured to obtain status information of cells of different standards, where the status information indicates at least one of a radio resource status, terminal distribution, and a service condition of the cells of the different standards; and a sending module, configured to send, according to the status information, coordination indication information to base stations or base station controllers of the cells of the different standards, so that the base stations or the base station controllers perform an inter-network collaboration operation according to the coordination indication information.

In a first possible implementation manner, the obtaining module is specifically configured to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

In a second possible implementation manner, with reference to the third aspect or the first possible implementation manner of the third aspect, the collaboration node further includes: a connection establishing module, to find the base stations or the base station controllers and establish a connection with the base stations or the base station controllers.

In a third possible implementation manner, with reference to the third aspect or the first or the second possible implementation manner of the third aspect, the coordination indication information includes at least one of a neighboring cell parameter, a handover threshold, a camping parameter, a power parameter, and a load threshold; and the sending module is specifically configured to: if a utilization rate of radio resources of the cells of the different standards reaches a first preset threshold, send the coordination indication information to the base stations or the base station controllers.

In a fourth possible implementation manner, with reference to the third aspect or the first or the second possible implementation manner of the third aspect, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; and the sending module is specifically configured to: if a utilization rate of radio resources of a long term evolution LTE cell reaches a second preset threshold, send the coordination indication information to eNodeBs.

In a fifth possible implementation manner, with reference to the third aspect or the first or the second possible implementation manner of the third aspect, the sending module is specifically configured to send, according to at least one of a radio resource status, a user priority, and a service type of the cells of the different standards, a service bearer adjusting indication to the base stations or the base station controllers, so that the cells of the different standards adjust service bearers.

In a sixth possible implementation manner, with reference to the third aspect or the first or the second possible implementation manner of the third aspect, the sending module is specifically configured to send, according to load information of cells in an LTE system, frequency resources used by edge users to a base station of a cell, of which load is higher than a preset threshold.

In a seventh possible implementation manner, with reference to the third aspect or the first or the second possible implementation manner of the third aspect, the sending module is specifically configured to send, according to load conditions of the cells of the different standards, indication information of shutting down cells of a part of frequency points or cells of a part of standards to the base stations or the base station controllers, or send indication information of starting shut-down cells to the base stations or the base station controllers.

In an eighth possible implementation manner, with reference to the third aspect or the first or the second possible implementation manner of the third aspect, the sending module is specifically configured to send, according to user service conditions of macro base stations and micro base stations of an LTE system, almost blank subframe ABS configuration information to the macro base stations or the micro base stations.

In a ninth possible implementation manner, with reference to the third aspect or the first or the second possible implementation manner of the third aspect, the sending module is specifically configured to send, according to a PCI conflict condition of cells in an LTE system, a non-conflict PCI to a base station of a PCI-conflicting cell.

In a tenth possible implementation manner, with reference to the third aspect or any one of the first to the ninth possible implementation manners of the third aspect, the collaboration node further includes: a configuring module, configured to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

According to a fourth aspect, a network side device is provided, where the network side device is a base station or a base station controller of a cell of a different standard, and includes: a receiving module, configured to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and an executing module, configured to perform an inter-network collaboration operation according to the coordination indication information.

In a first possible implementation manner, the network side device further includes: a sending module, configured to periodically send the status information to the collaboration node, or send the status information to the collaboration node when a radio resource status changes, or send, by responding to a request message, requesting the status information, of the collaboration node, the status information to the collaboration node.

In a second possible implementation manner, with reference to the fourth aspect or the first possible implementation manner of the fourth aspect, the network side device further includes: a connection establishing module, configured to find the collaboration node and establish a connection with the collaboration node.

In a third possible implementation manner, with reference to the fourth aspect or the first or the second possible implementation manner of the fourth aspect, the coordination indication information includes at least one of a neighboring cell parameter, a handover threshold, a camping parameter, a power parameter, and a load threshold; and the receiving module is specifically configured to receive the coordination indication information, which is sent by the collaboration node when a utilization rate of radio resources of the cells of the different standards reaches a first preset threshold.

In a fourth possible implementation manner, with reference to the fourth aspect or the first or the second possible implementation manner of the fourth aspect, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; the network side device is an eNodeB; and the receiving module is specifically configured to receive the coordination indication information, which is sent by the collaboration node when a utilization rate of radio resources of a long term evolution LTE cell reaches a second preset threshold.

In a fifth possible implementation manner, with reference to the fourth aspect or the first or the second possible implementation manner of the fourth aspect, the coordination indication information includes a service bearer adjusting indication that is determined by the collaboration node according to at least one of a radio resource status, a user priority, and a service type of the cells of the different standards; and the executing module is specifically configured to adjust service bearers according to the coordination indication information.

In a sixth possible implementation manner, with reference to the fourth aspect or the first or the second possible implementation manner of the fourth aspect, the coordination indication information includes frequency resources used by edge users and determined, according to load information of cells in an LTE system, by the collaboration node for a cell, of which load is higher than a preset threshold.

In a seventh possible implementation manner, with reference to the fourth aspect or the first or the second possible implementation manner of the fourth aspect, the coordination indication information includes indication information of shutting down cells of a part of frequency points or cells of a part of standards, or indication information of starting shut-down cells sent by the collaboration node according to load conditions of the cells of the different standards.

In an eighth possible implementation manner, with reference to the fourth aspect or the first or the second possible implementation manner of the fourth aspect, the coordination indication information includes almost blank subframe ABS configuration information that is determined by the collaboration node according to user service conditions of macro base stations and micro base stations of an LTE system.

In a ninth possible implementation manner, with reference to the fourth aspect or the first or the second possible implementation manner of the fourth aspect, the coordination indication information includes a non-conflict PCI that is determined by the collaboration node according to a PCI conflict condition of cells in an LTE system.

According to a fifth aspect, a collaboration node is provided, including: a receiver, configured to obtain status information of cells of different standards, where the status information indicates at least one of a radio resource status, terminal distribution, and a service condition of the cells of the different standards; a processor, configured to determine coordination indication information according to the status information; and a sender, configured to send the coordination indication information to base stations or base station controllers of the cells of the different standards, so that the base stations or the base station controllers perform an inter-network collaboration operation according to the coordination indication information.

In a first possible implementation manner, the receiver is specifically configured to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

In a second possible implementation manner, with reference to the fifth aspect or the first possible implementation manner of the fifth aspect, the processor is further configured to find the base stations or the base station controllers and establish a connection with the base stations or the base station controllers.

In a third possible implementation manner, with reference to the fifth aspect or the first or the second possible implementation manner of the fifth aspect, the coordination indication information includes at least one of a neighboring cell parameter, a handover threshold, a camping parameter, a power parameter, and a load threshold; and the processor is specifically configured to: if a utilization rate of radio resources of the cells of the different standards reaches a first preset threshold, determine the coordination indication information.

In a fourth possible implementation manner, with reference to the fifth aspect or the first or the second possible implementation manner of the fifth aspect, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; the processor is specifically configured to: if a utilization rate of radio resources of a long term evolution LTE cell reaches a second preset threshold, determine the coordination indication information; and the sender is specifically configured to send the coordination indication information to eNodeBs.

In a fifth possible implementation manner, with reference to the fifth aspect or the first or the second possible implementation manner of the fifth aspect, the processor is specifically configured to determine a service bearer indication according to at least one of a radio resource status, a user priority, and a service type of the cells of the different standards; and the sender is specifically configured to send the service bearer adjusting indication to the base stations or the base station controllers, so that the cells of the different standards adjust service bearers.

In a sixth possible implementation manner, with reference to the fifth aspect or the first or the second possible implementation manner of the fifth aspect, the processor is specifically configured to determine, according to load information of cells in an LTE system, frequency resources used by edge users of a cell, of which load is higher than a preset threshold; and the sender is specifically configured to send the frequency resources used by the edge users to a base station of the cell, of which the load is higher than the preset threshold.

In a seventh possible implementation manner, with reference to the fifth aspect or the first or the second possible implementation manner of the fifth aspect, the processor is specifically configured to determine, according to load conditions of the cells of the different standards, indication information of shutting down cells of a part of frequency points or cells of a part of standards, or indication information of starting shut-down cells; and the sender is specifically configured to send the indication information of shutting down cells of a part of frequency points or cells of a part of standards to the base stations or the base station controllers, or send the indication information of starting shut-down cells to the base stations or the base station controllers.

In an eighth possible implementation manner, with reference to the fifth aspect or the first or the second possible implementation manner of the fifth aspect, the processor is specifically configured to determine, according to user service conditions of macro base stations and micro base stations of an LTE system, almost blank subframe ABS configuration information; and the sender is specifically configured to send the ABS configuration information to the macro base stations or the micro base stations.

In a ninth possible implementation manner, with reference to the fifth aspect or the first or the second possible implementation manner of the fifth aspect, the processor is specifically configured to determine, according to a PCI conflict condition of cells in an LTE system, a non-conflict PCI for a PCI-conflicting cell; and the sender is specifically configured to send the non-conflict PCI to a base station of the PCI-conflicting cell.

In a tenth possible implementation manner, with reference to the fifth aspect or any one of the first to the ninth possible implementation manner of the fifth aspect, the processor is further configured to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

According to a sixth aspect, a network side device is provided, where the network side device is a base station or a base station controller of a cell of a different standard, and includes: a receiver, configured to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and a processor, configured to perform an inter-network collaboration operation according to the coordination indication information.

In a first possible implementation manner, the network side device further includes: a sender, configured to periodically send the status information to the collaboration node, or send the status information to the collaboration node when a radio resource status changes, or send, by responding to a request message, requesting the status information, of the collaboration node, the status information to the collaboration node.

In a second possible implementation manner, with reference to the sixth aspect or the first possible implementation manner of the sixth aspect, the processor is further configured to find the collaboration node and establish a connection with the collaboration node.

In a third possible implementation manner, with reference to the sixth aspect or the first or the second possible implementation manner of the sixth aspect, the coordination indication information includes at least one of a neighboring cell parameter, a handover threshold, a camping parameter, a power parameter, and a load threshold; and the receiver is specifically configured to receive the coordination indication information, which is sent by the collaboration node when a utilization rate of radio resources of the cells of the different standards reaches a first preset threshold.

In a fourth possible implementation manner, with reference to the sixth aspect or the first or the second possible implementation manner of the sixth aspect, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; the network side device is an eNodeB; and the receiver is specifically configured to receive the coordination indication information, which is sent by the collaboration node when a utilization rate of radio resources of a long term evolution LTE cell reaches a second preset threshold.

In a fifth possible implementation manner, with reference to the sixth aspect or the first or the second possible implementation manner of the sixth aspect, the coordination indication information includes a service bearer adjusting indication that is determined by the collaboration node according to at least one of a radio resource status, a user priority, and a service type of the cells of the different standards; and the processor is specifically configured to adjust service bearers according to the coordination indication information.

In a sixth possible implementation manner, with reference to the sixth aspect or the first or the second possible implementation manner of the sixth aspect, the coordination indication information includes frequency resources used by edge users and determined, according to load information of cells in an LTE system, by the collaboration node for a cell, of which load is higher than a preset threshold.

In a seventh possible implementation manner, with reference to the sixth aspect or the first or the second possible implementation manner of the sixth aspect, the coordination indication information includes indication information of shutting down cells of a part of frequency points or cells of a part of standards, or indication information of starting shut-down cells sent by the collaboration node according to load conditions of the cells of the different standards.

In an eighth possible implementation manner, with reference to the sixth aspect or the first or the second possible implementation manner of the sixth aspect, the coordination indication information includes almost blank subframe ABS configuration information that is determined by the collaboration node according to user service conditions of macro base stations and micro base stations of an LTE system.

In a ninth possible implementation manner, with reference to the sixth aspect or the first or the second possible implementation manner of the sixth aspect, the coordination indication information includes a non-conflict PCI that is determined by the collaboration node according to a PCI conflict condition of cells in an LTE system.

Based on the foregoing technical solutions, in the embodiments of the present invention, coordination indication information is sent to base stations or base station controllers of cells of different standards according to status information of the cells of the different standards, so that the base stations or the base station controllers perform an inter-network collaboration operation according to the coordination indication information, which can maximize a utilization rate of wireless network resources and therefore improve network performance.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of an inter-network collaboration method according to an embodiment of the present invention;
FIG. 2 is a schematic diagram of a multi-standard network architecture according to an embodiment of the present invention;
FIG. 3 is another schematic flowchart of an inter-network collaboration method according to an embodiment of the present invention;
FIG. 4 is still another schematic flowchart of an inter-network collaboration method according to an embodiment of the present invention;
FIG. 5 is still another schematic flowchart of an inter-network collaboration method according to an embodiment of the present invention;
FIG. 6 is a schematic flowchart of an inter-network collaboration method according to another embodiment of the present invention;
FIG. 7 is another schematic flowchart of an inter-network collaboration method according to another embodiment of the present invention;
FIG. 8 is a schematic block diagram of a collaboration node according to an embodiment of the present invention;
FIG. 9 is another schematic block diagram of a collaboration node according to an embodiment of the present invention;
FIG. 10 is still another schematic block diagram of a collaboration node according to an embodiment of the present invention;
FIG. 11 is a schematic block diagram of a network side device according to an embodiment of the present invention;
FIG. 12 is another schematic block diagram of a network side device according to an embodiment of the present invention;
FIG. 13 is still another schematic block diagram of a network side device according to an embodiment of the present invention;
FIG. 14 is a schematic block diagram of a collaboration node according to another embodiment of the present invention; and
FIG. 15 is a schematic block diagram of a network side device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention may be applied to various communications systems, for example, a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a General Packet Radio Service (General Packet Radio Service, "GPRS" for short), a Long Term Evolution (Long Term Evolution, "LTE" for short) system, an LTE Frequency Division Duplex (Frequency Division Duplex, "FDD" for short) system, LTE Time Division Duplex (Time Division Duplex, "TDD" for short), a Universal Mobile Telecommunication System (Universal Mobile Telecommunication System, "UMTS" for short), and a Worldwide Interoperability for Microwave Access (Worldwide Interoperability for Microwave Access, "WiMAX" for short) communications system and the like.

In the embodiments of the present invention, a base station may be a base station (Base Transceiver Station, "BTS" for short) in GSM or CDMA, may also be a base station (NodeB, "NB" for short) in WCDMA, and may also be an evolved base station (Evolutional Node B, "ENB" or "eNodeB" for short) in LTE, which is not limited in the present invention.

In the embodiments of the present invention, a base station controller may be a base station controller (Base Station Controller, "BTS" for short) in GSM or CDMA, and may also be a radio network controller (Radio Network Controller, "RNC" for short) in UMTS, which is not limited in the present invention.

In the embodiments of the present invention, a collaboration node (eCoordinator) indicates a unit coordinating a multi-standard network; a collaboration node, which is not limited in a deployment position, may be separately deployed and may also be deployed with a network management system, a controller, or a base station; in other words, the collaboration node may be separately deployed and may also be deployed in another device.

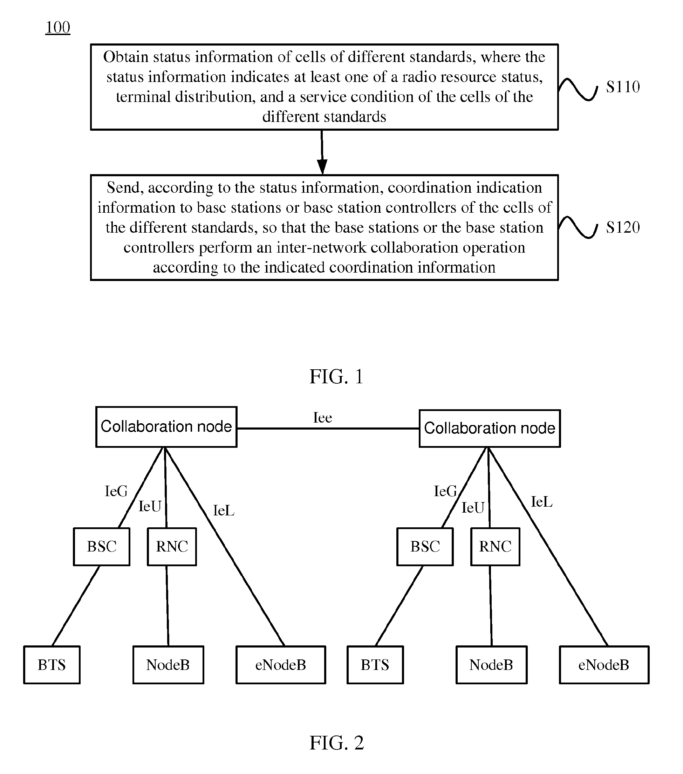

FIG. 1 shows a schematic flowchart of an inter-network collaboration method 100 according to an embodiment of the present invention. The method of FIG. 1 is executed by a collaboration node, and as shown in FIG. 1, the method 100 includes:

S110. Obtain status information of cells of different standards, where the status information indicates at least one of a radio resource status, terminal distribution, and a service condition of the cells of the different standards.

S120. Send, according to the status information, coordination indication information to base stations or base station controllers of the cells of the different standards, so that the base stations or the base station controllers perform an inter-network collaboration operation according to the coordination indication information.

In the embodiment of the present invention, in order to optimize a utilization rate of resources of a multi-standard network, radio resources and service bearers between multi-standard multi-layer networks are uniformly collaborated by using a collaboration node. The collaboration node obtains status information of cells of different standards, where the status information indicates at least one of a radio resource status, terminal distribution, and a service condition of the cells of the different standards; and sends, according to the status information, coordination indication information to base stations or base station controllers of the cells of the different standards, so that the base stations or the base station controllers perform an inter-network collaboration operation according to the coordination indication information. A wireless network resource status is obtained in real time by using a newly added collaboration node to perform collaboration optimization between standards, which implements collaboration optimization of a unified architecture for radio resources between standards and therefore can maximize a utilization rate of wireless network resources.

Therefore, in the inter-network collaboration method according to the embodiment of the present invention, coordination indication information is sent to base stations or base station controllers of cells of different standards according to status information of the cells of the different standards, so that the base stations or the base station controllers perform an inter-network collaboration operation according to the coordination indication information, which can maximize a utilization rate of wireless network resources and therefore improve network performance.

It should be understood that the technical solution of the embodiment of the present invention may be applied to various multi-standard network systems, where standards may be GSM, UMTS, or LTE, which is not limited in the embodiment of the present invention, for example, may also be CDMA or wireless fidelity (wireless-fidelity, "WiFi" for short). For ease of description, the following embodiments are described by using a multi-standard network of GSM, UMTS, and LTE as an example.

As shown in FIG. 2, in a multi-standard network system of GSM, UMTS, and LTE, various cells are collaborated by using a collaboration node eCoordinator. An IeG interface between the collaboration node and GSM bears transmission of GSM status information and coordination indication information for GSM; an IeU interface between the collaboration node and UMTS bears transmission of UMTS status information and coordination indication information for UMTS; an IeL interface between the collaboration node and LTE bears transmission of LTE status information and coordination indication information for LTE; and an Iee interface between collaboration nodes bears interaction information of area edges. Optionally, these interfaces may be newly established connections and may also use existing connections.

In the embodiment of the present invention, the status information indicates at least one of a radio resource status, terminal distribution, and a service condition of the cells of the different standards, for example, one or more of a utilization rate of radio resources, a user priority, a service type, a terminal type, a user service condition, load information, an access success rate, a handover success rate, and a drop rate. The collaboration node may obtain one or more of the foregoing information and send, according to the obtained information, coordination indication information to a base station or a base station controller.

In S110, the collaboration node obtains status information of cells of different standards.

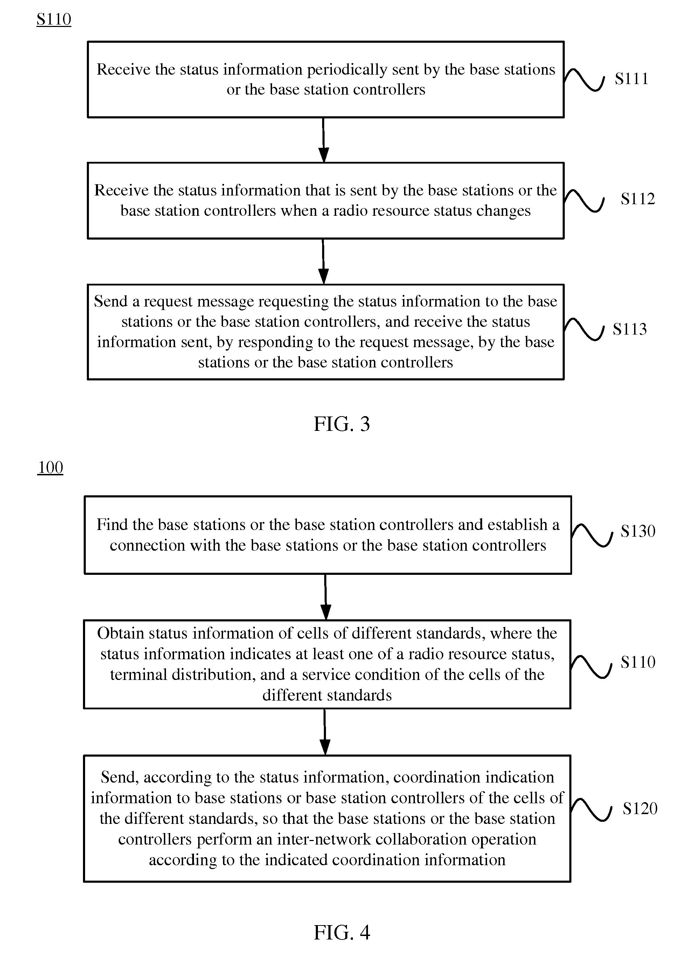

The collaboration node obtains status information of cells of various standards in multiple manners, and as shown in FIG. 3, optionally, S110 includes:
S111. receiving the status information periodically sent by the base stations or the base station controllers; or
S 112. receiving the status information that is sent by the base stations or the base station controllers when a radio resource status changes; or
S113. sending a request message for requesting the status information to the base stations or the base station controllers, and receiving the status information sent, by responding to the request message, by the base stations or the base station controllers.

Specifically, the status information may be reported in an active reporting manner or in a request reporting manner. In the active reporting manner, the base stations or the base station controllers send the status information to the collaboration node periodically or when the radio resource status changes. In the request reporting manner, the collaboration node first sends the request message for requesting the status information to the base stations or the base station controllers, and then the base stations or the base station controllers report the status information to the collaboration node according to the request message. For example, in a system shown in FIG. 2, a BSC, an RNC, and an eNodeB report status information to a collaboration node eCoordinator through IeG, IeU, and IeL interfaces, respectively.

In the embodiment of the present invention, as shown in FIG. 4, optionally, before S110, the method 100 further includes:

S130. Find the base stations or the base station controllers and establish a connection with the base stations or the base station controllers.

Specifically, a collaboration node and a base station or base station controller adopt a plug and play mechanism, that is, a collaboration node automatically finds a base station or a base station controller within an area, and automatically establishes a connection with the base station or the base station controller; or, a base station or a base station controller within an area automatically finds a collaboration node and automatically establishes a connection with the collaboration node. After establishing the connection, the collaboration node obtains status information and delivers coordination indication information through the connection.

In S120, the collaboration node sends, according to the status information, coordination indication information to base stations or base station controllers of the cells of the different standards, so that the base stations or the base station controllers perform an inter-network collaboration operation according to the coordination indication information.

The collaboration node analyzes, according to obtained status information of cells of various standards, resource status and service distribution conditions within an area, and when a radio resource use reaches a preset threshold, starts an optimization procedure and sends coordination indication information to base stations or base station controllers, so that the base stations or the base station controllers perform an inter-network collaboration operation according to the coordination indication information, so as to optimize a whole network.

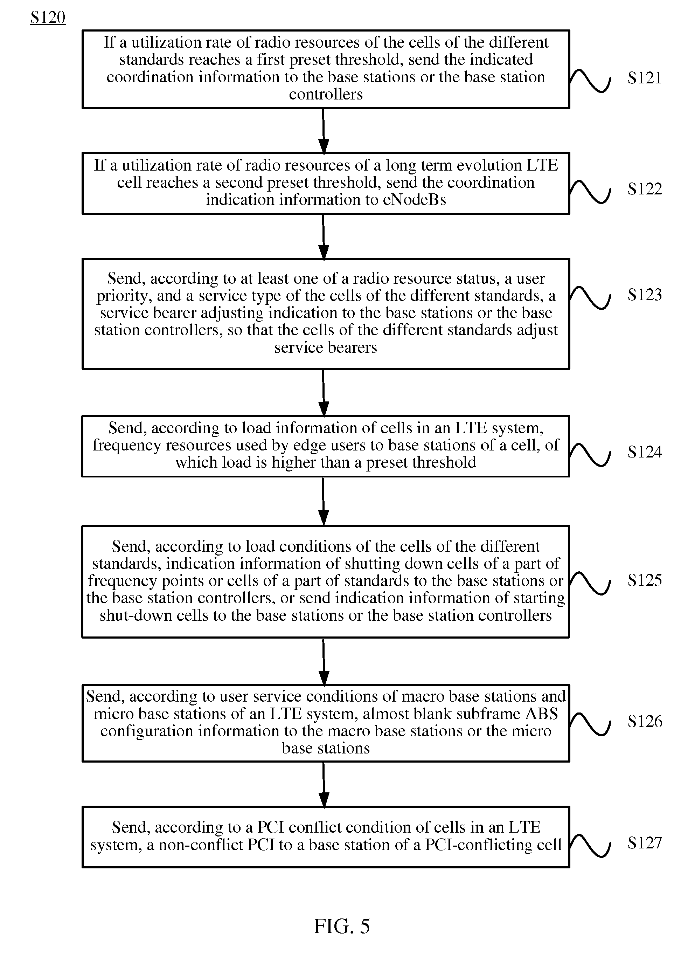

Optionally, as shown in FIG. 5, S120 includes:
S121. If a utilization rate of radio resources of the cells of the different standards reaches a first preset threshold, send the coordination indication information to the base stations or the base station controllers.

The coordination indication information includes at least one of a neighboring cell parameter, a handover threshold, a camping parameter, a power parameter, and a load threshold.

It should be understood that the first preset threshold in the embodiment of the present invention and a second preset threshold in the following indicate preset thresholds, and "first" and "second" are only intended for distinguishing different thresholds.

The collaboration node determines whether a utilization rate of radio resources within an area reaches the first preset threshold, and if the first preset threshold is reached, starts parameter optimization and delivers optimized parameters (for example, one or more of the foregoing parameters) to base stations or base station controllers, so that the base stations or the base station controllers perform a collaboration operation according to the delivered parameters. After receiving the parameters sent by the collaboration node, the base stations or the base station controllers perform the collaboration operation according to these parameters, for example, perform a handover or adjust power. The collaboration node detects an effect after optimization, and if a target is reached, for example, a utilization rate of radio resources is reduced to a target value, ends optimization; otherwise, performs optimization again and delivers new parameters to the base stations or the base station controllers. Alternatively, the collaboration node determines whether a handover success rate between two cells within the area is too low, if too low, starts handover optimization by adjusting handover parameters and delivering them to the base station or the base station controller, and observes whether the handover success rate meets a requirement; if the handover success rate does not meet the requirement, continues adjusting; if the handover success rate meets the requirement, stops optimization.

In this way, in the inter-network collaboration method according to the embodiment of the present invention, centralized optimization of radio resources for cells of different standards is performed, which can maximize a utilization rate of wireless network resources and therefore can improve network performance.

Optionally, as shown in FIG. 5, S120 includes:
S122. If a utilization rate of radio resources of a long term evolution LTE cell reaches a second preset threshold, send the coordination indication information to eNodeBs.

The coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold.

The collaboration node may perform collaboration optimization on cells in an LTE system. The collaboration node determines whether a utilization rate of radio resources of eNodeBs reaches the second preset threshold, and if the second preset threshold is reached, starts parameter optimization of the LTE system and delivers optimized parameters (for example, one or more of the foregoing parameters) to the eNodeBs, so that the eNodeBs perform a collaboration operation. After receiving the parameters sent by the collaboration node, the eNodeBs perform a collaboration operation according to these parameters, for example, perform a handover or adjust power. The collaboration node detects an effect after optimization, and if a target is reached, for example, a utilization rate of radio resources of an LTE network is reduced to a target value, ends optimization; otherwise, performs optimization again and delivers new parameters to the eNodeBs. Alternatively, the collaboration node determines whether an LTE interference index within the area reaches a threshold; if the threshold is exceeded, starts interference optimization, reallocates edge spectrums to all or a part of base stations within the area, and observes whether an interference optimization target is reached; if the interference optimization target is reached, stops optimization; if the interference optimization target is not reached, continues optimization.

In this way, in the inter-network collaboration method according to the embodiment of the present invention, centralized optimization of radio resources of an LTE network is performed, which can maximize a utilization rate of LTE network resources and therefore can improve network performance.

Optionally, as shown in FIG. 5, S120 includes:
S123. Send, according to at least one of a radio resource status, a user priority, and a service type of the cells of the different standards, a service bearer adjusting indication to the base stations or the base station controllers, so that the cells of the different standards adjust service bearers.

The collaboration node may perform service bearer adjustment according to status information of cells of different standards. The collaboration node comprehensively determines one or more of a user priority, a service type, and a radio resource status, and delivers a service bearer adjusting indication to base stations or base station controllers, so that the base stations or the base station controllers adjust service bearers, for example, adjust service bearers by means of a handover and so on. For example, when a network is busy, the collaboration node bears to networks of different layers by using a control instruction according to different data packet types, for example, adjusts a small-packet data service from UMTS to a GSM bearer, adjusts a large-packet download service to LTE, and adjusts a fast movement data service to a UMTS bearer; or adjusts a bearer according a service type, for example, uniformly adjusts a voice service to GSM, adjusts a video service to LTE, and adjusts Internet access to UMTS; or adjusts a bearer according to a user priority, for example, preferentially bears a high-priority user over LTE, bears a medium-priority user over UMTS, and bears a low-priority over GSM. The foregoing bearing policy may be dynamically set according to an actual network condition or a tariff policy of an operator. The collaboration node functions as a coordination execution entity of the policy, and a core advantage lies in that a user distribution condition may be dynamically adjusted according to a real-time network load condition.

Optionally, a service bearer includes: bearer selection based on a service type, bearer selection based on quality of service (Quality of Service, "QoS" for short), and bearer selection based on a load status, which, however, is not limited in the embodiment of the present invention.

Optionally, as shown in FIG. 5, S120 includes:
S124. Send, according to load information of cells in an LTE system, frequency resources used by edge users to a base station of a cell, of which load is higher than a preset threshold.

An edge user of each cell in an LTE system may be strongly interfered with by a neighboring cell using same time and frequency resources, which affects user throughput and experience. To ensure that these users can obtain better experience, edge users of neighboring cells may be coordinated to use different frequency resources, so as to reduce mutual interference. The collaboration node may determine, according to load information of each cell, whether large intra-Frequency interference occurs to an edge user of a cell, and when the cell load is high (that is, higher than a preset threshold), allocate frequency resources used by edge users, for a cell with a high load through joint analysis on surrounding cells, which ensures that edge users of neighboring cells may not interfere with each other and therefore improve experience of these users.

Optionally, as shown in FIG. 5, S120 includes:
S125. Send, according to load conditions of the cells of the different standards, indication information of shutting down cells of a part of frequency points or cells of a part of standards to the base stations or the base station controllers, or send indication information of starting shut-down cells to the base stations or the base station controllers.

With the development of mobile broadband (Mobile Broad Band, "MBB" for short), operators gradually establish multi-standard multi-frequency networks of LTE, UMTS, and GSM. A non-busy hour with a light load, such as at night, exists in a network. In this case, the operator may select to retain a part of network service capabilities and shut down a part of network service to save energy. In the embodiment of the present invention, a collaboration node may obtain a load condition of each standard in a network, and when a network load is low, select to shut down cells of a part of frequency points in a certain standard or cells of a certain standard, so as to save energy; and when network load is high, put a shut-down cell into use again.

Optionally, as shown in FIG. 5, S120 includes:
S126. Send, according to user service conditions of macro base stations and micro base stations of an LTE system, almost blank subframe ABS configuration information to the macro base stations or the micro base stations.

When a macro cell and a micro cell of LTE perform intra-frequency networking, an almost blank subframe (Almost Blank Sub-Frame, "ABS" for short) resource may be allocated for an edge user of a micro base station within a system by using an enhanced inter-cell interference coordination (enhanced inter-cell interference coordination, "eICIC" for short) technology, which, in combination with a coverage range extension technology (Range Extension) of a small station, allows the micro base station to serve more users and therefore improves experience of the edge users of the micro base station. The ABS subframe cannot be used by a macro base station, and therefore, the number of ABSs to be configured needs to be determined according to the number of users that can be served on an edge of a micro cellular, to wholly improve system capacity. In the embodiment of the present invention, a collaboration node may perform centralized analysis and judgment according to a served user condition of a macro base station and a micro base station, and collaboratively adjusts configuration of ABS subframes for each cell, which expands a serving range of the micro base station while wholly improving system capacity.

Optionally, as shown in FIG. 5, S120 includes:
S127. Send, according to a PCI conflict condition of cells in an LTE system, a non-conflict PCI to a base station of a PCI-conflicting cell.

Each cell in the LTE system is allocated with a PCI identifier of the cell, and a terminal in a connected state measures strength of a neighboring cell. When a neighboring cell with higher signal strength is found during the measurement, the PCI and signal strength of the cell are reported. The eNodeB determines, according to the PCI, whether to perform a corresponding handover indication, so as to make the terminal served by a more suitable cell. In some cases, a neighboring cell of a UE has a same PCI due to imperfect PCI planning. In this case, an eNodeB may select, according to a PCI reported by the UE, an incorrect neighboring cell for delivering a handover indication, causing a handover failure. The case in which a same PCI exists in a neighboring cell is called PCI conflict. In the embodiment of the present invention, a collaboration node may perform PCI conflict coordination reallocation for a PCI of a cell of a handover failure; and an eNodeB instructs a UE to perform cell global Index (Cell Global ID, "CGI" for short) measurement and sends a CGI of a PCI-conflicting cell to the collaboration node. The collaboration node performs analysis on PCI allocation of surrounding cells of the cell, and reallocates a non-conflict PCI to the cell, so as to solve a PCI conflict problem and ensure a handover success rate.

In the embodiment of the present invention, optionally, the method 100 further includes:
configuring a GSM or UMTS neighboring cell relationship according to an LTE neighboring cell relationship; or
configuring a UMTS or LTE neighboring cell relationship according to a GSM neighboring cell relationship; or
configuring a GSM or LTE neighboring cell relationship according to a UMTS neighboring cell relationship.

An operator often adopts co-site establishment of LTE, UMTS and GSM, and a network establishing policy of establishing a different-standard unified network (SingleRAN) of LTE, UMTS, and GSM by a same manufacturer at one site has already become a trend. In this case, each standard neighboring cell of one cell has a same geographic topology relationship. In the embodiment of the present invention, a collaboration node may rapidly perform topology analysis according to automatically established LTE neighboring cell relationships of one LTE cell and configure GSM and UMTS neighboring cell relationships of the cell. Further, for one GSM cell, analysis may also be performed according to a site topology relationship, and corresponding UMTS and LTE neighboring relationships are rapidly configured; for a UMTS cell, analysis may also be performed according to a site topology relationship, and corresponding GSM and LTE neighboring relationships are rapidly configured. By using centralized topology analysis of the collaboration node, efficiency of neighboring cell configuration is improved.

In the inter-network collaboration method according to the embodiment of the present invention, coordination indication information is flexibly configured based on different service characteristics according to status information of the cells of the different standards, which can maximize a utilization rate of wireless network resources, and improve network performance and user experience.

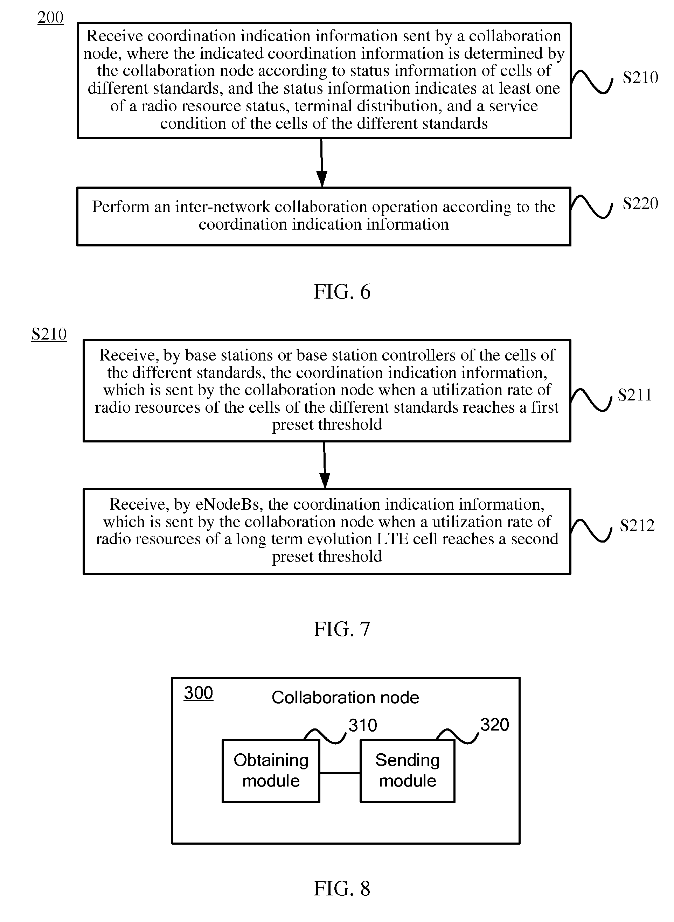

In the foregoing, with reference to FIG. 1 to FIG. 5, the inter-network collaboration method is described in detail from a perspective of a collaboration node. In the following, with reference to FIG. 6 to FIG. 7, the inter-network collaboration method is described in detail from a perspective of a base station or a base station controller.

FIG. 6 shows a schematic flowchart of an inter-network collaboration method 200 according to another embodiment of the present invention. The method of FIG. 6 is executed by a base station or a base station controller, and as shown in FIG. 6, the method 200 includes:
S210. Receive coordination indication information sent by a collaboration node, where the coordination indication information is determined by the collaboration node according to status information of cells of different standards, and the status information indicates at least one of a radio resource status, terminal distribution, and a service condition of the cells of the different standards.
S220. Perform an inter-network collaboration operation according to the coordination indication information.

In the embodiment of the present invention, radio resources and service bearers between multi-standard multi-layer networks are uniformly collaborated by the collaboration node. Base stations or base station controllers receive coordination indication information sent by a collaboration node, where the coordination indication information is determined by the collaboration node according to status information of cells of different standards, and the status information indicates at least one of a radio resource status, terminal distribution, and a service condition of the cells of the different standards; and perform an inter-network collaboration operation according to the coordination indication information. Collaboration optimization between standards is performed by using a newly added collaboration node, which implements collaboration optimization of a unified architecture for radio resources between standards and therefore can maximize a utilization rate of wireless network resources.

Therefore, in the inter-network collaboration method according to the embodiment of the present invention, an inter-network collaboration operation is performed according to the coordination indication information sent by the collaboration node, which can maximize a utilization rate of wireless network resources and therefore improve network performance.

In the embodiment of the present invention, optionally, before S210, the method 200 further includes:
periodically sending the status information to the collaboration node; or
sending the status information to the collaboration node when a radio resource status changes; or
receiving a request message for requesting the status information, which is sent by the collaboration node, and sending, by responding to the request message, the status information to the collaboration node.

Specifically, the base station or the base station controller may report the status information in an active reporting manner or in a request reporting manner. In the active reporting manner, the base stations or the base station controllers send the status information to the collaboration node periodically or when the radio resource status changes. In the request reporting manner, after receiving the request message for requesting the status information, which is sent by the collaboration node, the base stations or the base station controllers report the status information to the collaboration node according to the request message.

In the embodiment of the present invention, optionally, before S210, the method 200 further includes:
finding the collaboration node and establishing a connection with the collaboration node.

A collaboration node and a base station or base station controller adopt a plug and play mechanism, that is, a collaboration node automatically finds a base station or a base station controller within an area, and automatically establishes a connection with the base station or the base station controller; or, a base station or a base station controller automatically finds a collaboration node and automatically establishes a connection with the collaboration node. After establishing the connection, the base station or the base station controller sends the status information to the collaboration node through the connection and receives coordination indication information delivered by the collaboration node.

In the embodiment of the present invention, as shown in FIG. 7, optionally, S210 includes:
S211. Base stations or base station controllers of the cells of the different standards receive the coordination indication information, which is sent by the collaboration node when a utilization rate of radio resources of the cells of the different standards reaches a first preset threshold.

The coordination indication information includes at least one of a neighboring cell parameter, a handover threshold, a camping parameter, a power parameter, and a load threshold.

Specifically, the collaboration node determines whether a utilization rate of radio resources within an area reaches the first preset threshold, if the first preset threshold is reached, starts parameter optimization, and delivers optimized parameters to base stations or base station controllers, so that the base stations or the base station controllers perform a collaboration operation according to the delivered parameters. After receiving the parameters sent by the collaboration node, the base stations or the base station controllers perform the collaboration operation according to these parameters, for example, perform a handover or adjust power. The collaboration node detects an effect after optimization, and if a target is reached, for example, a utilization rate of radio resources is reduced to a target value, ends optimization; otherwise, performs optimization again and delivers new parameters to the base stations or the base station controllers.

In this way, in the inter-network collaboration method according to the embodiment of the present invention, centralized optimization of radio resources for cells of different standards is performed, which can maximize a utilization rate of wireless network resources and therefore can improve network performance.

Optionally, as shown in FIG. 7, S120 includes:
S212. The eNodeBs receive the coordination indication information, which is sent by the collaboration node when a utilization rate of radio resources of a long term evolution LTE cell reaches a second preset threshold.

The coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold.

Specifically, the collaboration node may perform collaboration optimization on cells in an LTE system. The collaboration node determines whether a utilization rate of radio resources of eNodeBs reaches the second preset threshold, if the second preset threshold is reached, starts parameter optimization of the LTE system, and delivers optimized parameters to the eNodeBs, so that the eNodeBs perform a collaboration operation. After receiving the parameters sent by the collaboration node, the eNodeBs perform a collaboration operation according to these parameters, for example, perform a handover or adjust power. The collaboration node detects an effect after optimization, and if a target is reached, for example, a utilization rate of radio resources of an LTE network is reduced to a target value, ends optimization; otherwise, performs optimization again and delivers new parameters to the eNodeBs, and the eNodeBs perform a collaboration operation again according to the new parameters.

In this way, in the inter-network collaboration method according to the embodiment of the present invention, centralized optimization of radio resources of an LTE network is performed, which can maximize a utilization rate of LTE network resources and therefore can improve network performance.

In the embodiment of the present invention, optionally, the coordination indication information includes a service bearer adjusting indication that is determined by the collaboration node according to at least one of a radio resource status, a user priority, and a service type of the cells of the different standards.

S220 includes:
adjusting service bearers according to the coordination indication information.

Specifically, the collaboration node may perform service bearer adjustment according to status information of cells of different standards. The collaboration node comprehensively determines one or more of a user priority, a service type, and a radio resource status, and delivers a service bearer adjusting indication to base stations or base station controllers, so that the base stations or the base station controllers adjust service bearers. After receiving the service bearer adjusting indication, the base stations or the base station controllers adjust service bearers according to the service bearer adjusting indication, for example, adjust service bearers by means of a handover and so on.

In the embodiment of the present invention, optionally, the coordination indication information includes frequency resources used by edge users and determined, according to load information of cells in an LTE system, by the collaboration node for a cell, of which load is higher than a preset threshold.

In the embodiment of the present invention, optionally, the coordination indication information includes indication information of shutting down cells of a part of frequency points or cells of a part of standards, or indication information of starting shut-down cells sent by the collaboration node according to load conditions of the cells of the different standards.

In the embodiment of the present invention, optionally, the coordination indication information includes almost blank subframe ABS configuration information that is determined by the collaboration node according to user service conditions of macro base stations and micro base stations of an LTE system.

In the embodiment of the present invention, optionally, the coordination indication information includes a non-conflict PCI that is determined by the collaboration node according to a PCI conflict condition of cells in an LTE system.

In the inter-network collaboration method according to the embodiment of the present invention, coordination indication information is flexibly configured based on different service characteristics according to status information of the cells of the different standards, which can maximize a utilization rate of wireless network resources, and improve network performance and user experience.

It should be understood that, in the embodiment of the present invention, interaction between a collaboration node and a base station or a base station controller, relevant features and functions, and so on, which are described at a collaboration node side, correspond to those described at a base station or base station controller side, and for brevity of description, details are not repeatedly described herein.

It should be understood that in various embodiments of the present invention, the serial numbers of the foregoing processes do not mean an order of implementation, and the implementation order of the processes depends on functions and internal logic of the processes and shall not constitute any limitation to the implementation process of the embodiments of the present invention.

In the foregoing, with reference to FIG. 1 to FIG. 7, the inter-network collaboration method according to the embodiments of the present invention is described in detail. In the following, with reference to FIG. 8 to FIG. 15, a collaboration node and a network side device according to embodiments of the present invention is described.

FIG. 8 shows a schematic block diagram of a collaboration node 300 according to an embodiment of the present invention. As shown in FIG. 8, the collaboration node 300 includes:
an obtaining module 310, configured to obtain status information of cells of different standards, where the status information indicates at least one of a radio resource status, terminal distribution, and a service condition of the cells of the different standards; and
a sending module 320, configured to send, according to the status information, coordination indication information to base stations or base station controllers of the cells of the different standards, so that the base stations or the base station controllers perform an inter-network collaboration operation according to the coordination indication information.

In the embodiment of the present invention, in order to optimize a utilization rate of resources of a multi-standard network, radio resources and service bearers between multi-standard multi-layer networks are uniformly collaborated by using a collaboration node. The obtaining module 310 obtains status information of cells of different standards, and the sending module 320 sends, according to the status information, coordination indication information to base stations or base station controllers of the cells of the different standards, so that the base stations or the base station controllers perform an inter-network collaboration operation according to the coordination indication information. A wireless network resource status is obtained in real time by using a newly added collaboration node to perform collaboration optimization between standards, which implements collaboration optimization of a unified architecture for radio resources between standards and therefore can maximize a utilization rate of wireless network resources.

Therefore, in the collaboration node according to the embodiment of the present invention, coordination indication information is sent to base stations or base station controllers of cells of different standards according to status information of the cells of the different standards, so that the base stations or the base station controllers perform an inter-network collaboration operation according to the coordination indication information, which can maximize a utilization rate of wireless network resources and therefore improve network performance.

In the embodiment of the present invention, optionally, the obtaining module 310 is specifically configured to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

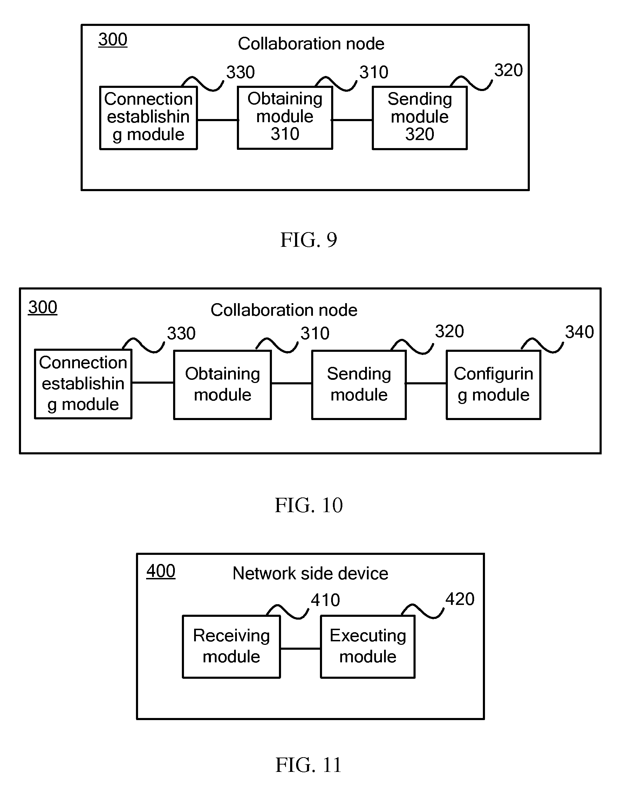

In the embodiment of the present invention, as shown in FIG. 9, optionally, the collaboration node 300 further includes:
a connection establishing module 330, configured to find the base stations or the base station controllers and establish a connection with the base stations or the base station controllers.

In the embodiment of the present invention, optionally, the coordination indication information includes at least one of a neighboring cell parameter, a handover threshold, a camping parameter, a power parameter, and a load threshold; and
the sending module 320 is specifically configured to: if a utilization rate of radio resources of the cells of the different standards reaches a first preset threshold, send the coordination indication information to the base stations or the base station controllers.

In the collaboration node according to the embodiment of the present invention, centralized optimization of radio resources for cells of different standards is performed, which can maximize a utilization rate of wireless network resources and therefore can improve network performance.

In the embodiment of the present invention, optionally, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold; and
the sending module 320 is specifically configured to: if a utilization rate of radio resources of a long term evolution LTE cell reaches a second preset threshold, send the coordination indication information to eNodeBs.

In the collaboration node according to the embodiment of the present invention, centralized optimization of radio resources of an LTE network is performed, which can maximize a utilization rate of LTE network resources and therefore can improve network performance.

In the embodiment of the present invention, optionally, the sending module 320 is specifically configured to send, according to at least one of a radio resource status, a user priority, and a service type of the cells of the different standards, a service bearer adjusting indication to the base stations or the base station controllers, so that the cells of the different standards adjust service bearers.

Optionally, the sending module 320 is specifically configured to send, according to load information of cells in an LTE system, frequency resources used by edge users to a base station of a cell, of which load is higher than a preset threshold.

Optionally, the sending module 320 is specifically configured to send, according to load conditions of the cells of the different standards, indication information of shutting down cells of a part of frequency points or cells of a part of standards to the base stations or the base station controllers, or send indication information of starting shut-down cells to the base stations or the base station controllers.

Optionally, the sending module 320 is specifically configured to send, according to user service conditions of macro base stations and micro base stations of an LTE system, almost blank subframe ABS configuration information to the macro base stations or the micro base stations.

Optionally, the sending module 320 is specifically configured to send, according to a PCI conflict condition of cells in an LTE system, a non-conflict PCI to a base station of a PCI-conflicting cell.

In the embodiment of the present invention, as shown in FIG. 10, optionally, the collaboration node 300 further includes:
a configuring module 340, configured to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

In the collaboration node according to the embodiment of the present invention, coordination indication information is flexibly configured based on different service characteristics according to status information of the cells of the different standards, which can maximize a utilization rate of wireless network resources, and improve network performance and user experience.

The collaboration node 300 according to the embodiment of the present invention may correspond to the collaboration node in the inter-network collaboration method according to the embodiments of the present invention, and the foregoing and other operations and/or functions of each module in the collaboration node 300 are respectively intended for implementing corresponding procedures of the methods in FIG. 1 to FIG. 7, and for brevity of description, details are not repeatedly described herein.

FIG. 11 shows a schematic block diagram of a network side device 400 according to an embodiment of the present invention. The network side device 400 is a base station or a base station controller of a cell of a different standard, and as shown in FIG. 11, the network side device 400 includes:
a receiving module 410, configured to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and
an executing module 420, configured to perform an inter-network collaboration operation according to the coordination indication information.

In the network side device according to the embodiment of the present invention, an inter-network collaboration operation is performed according to the coordination indication information, which is sent by the collaboration node, which can maximize a utilization rate of wireless network resources and therefore improve network performance.

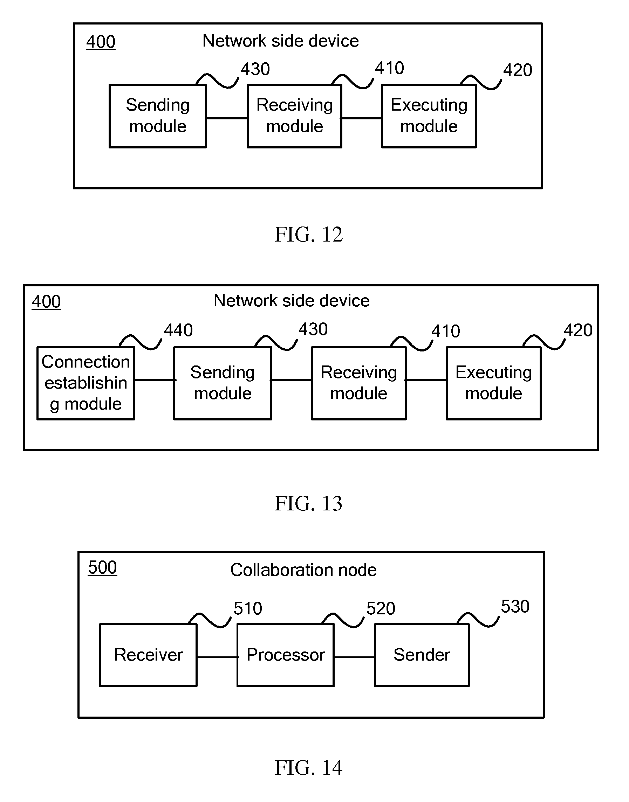

In the embodiment of the present invention, as shown in FIG. 12, optionally, the network side device 400 further includes:
a sending module 430, configured to periodically send the status information to the collaboration node; or send the status information to the collaboration node when a radio resource status changes; or send, by responding to a request message, requesting the status information, of the collaboration node, the status information to the collaboration node.

In the embodiment of the present invention, as shown in FIG. 13, optionally, the network side device 400 further includes:
a connection establishing module 440, configured to find the collaboration node and establish a connection with the collaboration node.

Optionally, the coordination indication information includes at least one of a neighboring cell parameter, a handover threshold, a camping parameter, a power parameter, and a load threshold; and
the receiving module 410 is specifically configured to receive the coordination indication information, which is sent by the collaboration node when a utilization rate of radio resources of the cells of the different standards reaches a first preset threshold.

Optionally, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold;
the network side device 400 is an eNodeB; and
the receiving module 410 is specifically configured to receive the coordination indication information, which is sent by the collaboration node when a utilization rate of radio resources of a long term evolution LTE cell reaches a second preset threshold.

Optionally, the coordination indication information includes a service bearer adjusting indication that is determined by the collaboration node according to at least one of a radio resource status, a user priority, and a service type of the cells of the different standards; and
the executing module 420 is specifically configured to adjust service bearers according to the coordination indication information.

Optionally, the coordination indication information includes frequency resources used by edge users and determined, according to load information of cells in an LTE system, by the collaboration node for a cell, of which load is higher than a preset threshold.

Optionally, the coordination indication information includes indication information of shutting down cells of a part of frequency points or cells of a part of standards, or indication information of starting shut-down cells sent by the collaboration node according to load conditions of the cells of the different standards.

Optionally, the coordination indication information includes almost blank subframe ABS configuration information that is determined by the collaboration node according to user service conditions of macro base stations and micro base stations of an LTE system.

Optionally, the coordination indication information includes a non-conflict PCI that is determined by the collaboration node according to a PCI conflict condition of cells in an LTE system.

In the network side device according to the embodiment of the present invention, coordination indication information is flexibly configured based on different service characteristics according to status information of the cells of the different standards, which can maximize a utilization rate of wireless network resources, and improve network performance and user experience.

The network side device 400 according to the embodiment of the present invention may correspond to the base station or the base station controller in the inter-network collaboration method according to the embodiment of the present invention, and the foregoing and other operations and/or functions of each module in the network side device 400 are respectively intended for implementing corresponding procedures of the methods in FIG. 1 to FIG. 7, and for brevity of description, details are not repeatedly described herein.

FIG. 14 shows a schematic block diagram of a collaboration node 500 according to another embodiment of the present invention. As shown in FIG. 14, the collaboration node 500 includes:
a receiver 510, configured to obtain status information of cells of different standards, where the status information indicates at least one of a radio resource status, terminal distribution, and a service condition of the cells of the different standards;
a processor 520, configured to determine coordination indication information according to the status information; and
a sender 530, configured to send the coordination indication information to base stations or base station controllers of the cells of the different standards, so that the base stations or the base station controllers perform an inter-network collaboration operation according to the coordination indication information.

In the collaboration node according to the embodiment of the present invention, coordination indication information is sent to base stations or base station controllers of cells of different standards according to status information of the cells of the different standards, so that the base stations or the base station controllers perform an inter-network collaboration operation according to the coordination indication information, which can maximize a utilization rate of wireless network resources and therefore improve network performance.

Optionally, the receiver 510 is specifically configured to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

Optionally, the processor 520 is further configured to find the base stations or the base station controllers and establish a connection with the base stations or the base station controllers.

Optionally, the coordination indication information includes at least one of a neighboring cell parameter, a handover threshold, a camping parameter, a power parameter, and a load threshold.

The processor 520 is specifically configured to: if a utilization rate of radio resources of the cells of the different standards reaches a first preset threshold, determine the coordination indication information.

In the collaboration node according to the embodiment of the present invention, centralized optimization of radio resources for cells of different standards is performed, which can maximize a utilization rate of wireless network resources and therefore can improve network performance.

Optionally, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold;
the processor 520 is specifically configured to: if a utilization rate of radio resources of a long term evolution LTE cell reaches a second preset threshold, determine the coordination indication information; and
the sender 530 is specifically configured to send the coordination indication information to eNodeBs.

In the collaboration node according to the embodiment of the present invention, centralized optimization of radio resources of an LTE network is performed, which can maximize a utilization rate of LTE network resources and therefore can improve network performance.

Optionally, the processor 520 is specifically configured to determine a service bearer indication according to at least one of a radio resource status, a user priority, and a service type of the cells of the different standards; and
the sender 530 is specifically configured to send the service bearer adjusting indication to the base stations or the base station controllers, so that the cells of the different standards adjust service bearers.

Optionally, the processor 520 is specifically configured to determine, according to load information of cells in an LTE system, frequency resources used by edge users of a cell, of which load is higher than a preset threshold; and
the sender 530 is specifically configured to send the frequency resources used by the edge users to a base station of the cell, of which the load is higher than the preset threshold;

Optionally, the processor 520 is specifically configured to determine, according to load conditions of the cells of the different standards, indication information of shutting down cells of a part of frequency points or cells of a part of standards, or indication information of starting shut-down cells; and
the sender 530 is specifically configured to send the indication information of shutting down cells of a part of frequency points or cells of a part of standards to the base stations or the base station controllers, or send the indication information of starting shut-down cells to the base stations or the base station controllers.

Optionally, the processor 520 is specifically configured to determine, according to user service conditions of macro base stations and micro base stations of an LTE system, almost blank subframe ABS configuration information; and
the sender 530 is specifically configured to send the ABS configuration information to the macro base stations or the micro base stations.

Optionally, the processor 520 is specifically configured to determine, according to a PCI conflict condition of cells in an LTE system, a non-conflict PCI for a PCI-conflicting cell; and
the sender 530 is specifically configured to send the non-conflict PCI to a base station of the PCI-conflicting cell.

Optionally, the processor 520 is specifically configured to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

In the collaboration node according to the embodiment of the present invention, coordination indication information is flexibly configured based on different service characteristics according to status information of the cells of the different standards, which can maximize a utilization rate of wireless network resources, and improve network performance and user experience.

The collaboration node 500 according to the embodiment of the present invention may correspond to the collaboration node in the inter-network collaboration method according to the embodiments of the present invention, and the foregoing and other operations and/or functions of each module in the collaboration node 500 are respectively intended for implementing corresponding procedures of the methods in FIG. 1 to FIG. 7, and for brevity of description, details are not repeatedly described herein.

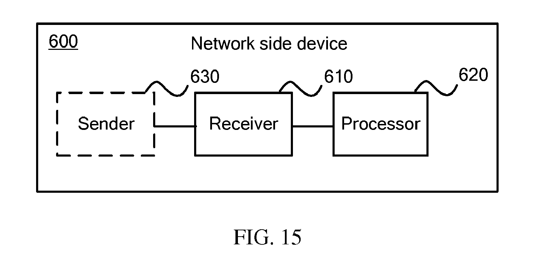

FIG. 15 shows a schematic block diagram of a network side device 600 according to another embodiment of the present invention. The network side device 600 is a base station or a base station controller of a cell of a different standard, and as shown in FIG. 15, the network side device 600 includes:
a receiver 610, configured to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and
a processor 620, configured to perform an inter-network collaboration operation according to the coordination indication information.

In the network side device according to the embodiment of the present invention, an inter-network collaboration operation is performed according to the coordination indication information, which is sent by the collaboration node, which can maximize a utilization rate of wireless network resources and therefore improve network performance.

In the embodiment of the present invention, as shown in FIG. 15, optionally, the network side device 600 further includes:
a sender 630, configured to periodically send the status information to the collaboration node; or send the status information to the collaboration node when a radio resource status changes; or send, by responding to a request message, requesting the status information, of the collaboration node, the status information to the collaboration node.

Optionally, the processor 620 is further configured to find the collaboration node and establish a connection with the collaboration node.

Optionally, the coordination indication information includes at least one of a neighboring cell parameter, a handover threshold, a camping parameter, a power parameter, and a load threshold; and
the receiver 610 is specifically configured to receive the coordination indication information, which is sent by the collaboration node when a utilization rate of radio resources of the cells of the different standards reaches a first preset threshold.

Optionally, the coordination indication information includes at least one of a physical cell identity PCI of an evolved base station eNodeB, a random access channel RACH sequence of an eNodeB, a neighboring cell parameter, a handover threshold, a camping parameter, a power parameter, and a load threshold;
the network side device 600 is an eNodeB; and
the receiver 610 is specifically configured to receive the coordination indication information, which is sent by the collaboration node when a utilization rate of radio resources of a long term evolution LTE cell reaches a second preset threshold.

Optionally, the coordination indication information includes a service bearer adjusting indication that is determined by the collaboration node according to at least one of a radio resource status, a user priority, and a service type of the cells of the different standards; and
the processor 620 is specifically configured to adjust service bearers according to the coordination indication information.

Optionally, the coordination indication information includes frequency resources used by edge users and determined, according to load information of cells in an LTE system, by the collaboration node for a cell, of which load is higher than a preset threshold.

Optionally, the coordination indication information includes indication information of shutting down cells of a part of frequency points or cells of a part of standards, or indication information of starting shut-down cells sent by the collaboration node according to load conditions of the cells of the different standards.

Optionally, the coordination indication information includes almost blank subframe ABS configuration information that is determined by the collaboration node according to user service conditions of macro base stations and micro base stations of an LTE system.

Optionally, the coordination indication information includes a non-conflict PCI that is determined by the collaboration node according to a PCI conflict condition of cells in an LTE system.

In the network side device according to the embodiment of the present invention, coordination indication information is flexibly configured based on different service characteristics according to status information of the cells of the different standards, which can maximize a utilization rate of wireless network resources, and improve network performance and user experience.

The network side device 600 according to the embodiment of the present invention may correspond to the base station or the base station controller in the inter-network collaboration method according to the embodiment of the present invention, and the foregoing and other operations and/or functions of each module in the network side device 600 are respectively intended for implementing corresponding procedures of the methods in FIG. 1 to FIG. 7, and for brevity of description, details are not repeatedly described herein.

It should be understood that, in the embodiments of the present invention, the term "and/or" describes only an association relationship between associated objects, and indicates that three relationships may exist. For example, A and/or B may indicate that: A exists separately, both A and B exist, and B exists separately. In addition, the symbol "/" in this specification generally indicates that associated objects before and after the symbol are in an "or" relationship.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment of the present invention according to actual needs.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope of the present invention shall fall within the protection scope of the present invention. Therefore, the protection scope of the present invention shall be subject to the protection scope of the claims.

## Claims

1. An inter-network collaboration method, comprising:
obtaining status information of cells of different standards, where the status information indicates at least one of a radio resource status, terminal distribution, and a service condition of the cells of the different standards; and
sending, according to the status information, coordination indication information to base stations or base station controllers of the cells of the different standards, so that the base stations or the base station controllers perform an inter-network collaboration operation according to the coordination indication information.

2. The method according to claim 1, wherein the obtaining status information of cells of different standards comprises:
receiving the status information periodically sent by the base stations or the base station controllers; or
receiving the status information that is sent by the base stations or the base station controllers when a radio resource status changes; or
sending a request message for requesting the status information to the base stations or the base station controllers, and receiving the status information sent, by responding to the request message, by the base stations or the base station controllers.

3. The method according to claim 1 or 2, wherein before the obtaining status information of cells of different standards, the method further comprises:
finding the base stations or the base station controllers and establishing a connection with the base stations or the base station controllers.

4. The method according to any one of claims 1 to 3, wherein the coordination indication information comprises at least one of a neighboring cell parameter, a handover threshold, a camping parameter, a power parameter, and a load threshold; and
the sending, according to the status information, coordination indication information to base stations or base station controllers of the cells of the different standards comprises:
if a utilization rate of radio resources of the cells of the different standards reaches a first preset threshold, sending the coordination indication information to the base stations or the base station controllers.

5. The method according to any one of claims 1 to 3, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold; and
the sending, according to the status information, coordination indication information to base stations or base station controllers of the cells of the different standards comprises:
if a utilization rate of radio resources of a long term evolution LTE cell reaches a second preset threshold, sending the coordination indication information to eNodeBs.

6. The method according to any one of claims 1 to 3, wherein the sending, according to the status information, coordination indication information to base stations or base station controllers of the cells of the different standards comprises:
sending, according to at least one of a radio resource status, a user priority, and a service type of the cells of the different standards, a service bearer adjusting indication to the base stations or the base station controllers, so that the cells of the different standards adjust service bearers.

7. The method according to any one of claims 1 to 3, wherein the sending, according to the status information, coordination indication information to base stations or base station controllers of the cells of the different standards comprises:
sending, according to load information of cells in an LTE system, frequency resources used by edge users to a base station of a cell, of which load is higher than a preset threshold.

8. The method according to any one of claims 1 to 3, wherein the sending, according to the status information, coordination indication information to base stations or base station controllers of the cells of the different standards comprises:
sending, according to load conditions of the cells of the different standards, indication information of shutting down cells of a part of frequency points or cells of a part of standards to the base stations or the base station controllers, or sending indication information of starting shut-down cells to the base stations or the base station controllers.

9. The method according to any one of claims 1 to 3, wherein the sending, according to the status information, coordination indication information to base stations or base station controllers of the cells of the different standards comprises:
sending, according to user service conditions of macro base stations and micro base stations of an LTE system, almost blank subframe ABS configuration information to the macro base stations or the micro base stations.

10. The method according to any one of claims 1 to 3, wherein the sending, according to the status information, coordination indication information to base stations or base station controllers of the cells of the different standards comprises:
sending, according to a PCI conflict condition of cells in an LTE system, a non-conflict PCI to a base station of a PCI-conflicting cell.

11. The method according to any one of claims 1 to 10, wherein the method further comprises:
configuring a GSM or UMTS neighboring cell relationship according to an LTE neighboring cell relationship; or
configuring a UMTS or LTE neighboring cell relationship according to a GSM neighboring cell relationship; or
configuring a GSM or LTE neighboring cell relationship according to a UMTS neighboring cell relationship.

12. An inter-network collaboration method, comprising:
receiving coordination indication information sent by a collaboration node, where the coordination indication information is determined by the collaboration node according to status information of cells of different standards, and the status information indicates at least one of a radio resource status, terminal distribution, and a service condition of the cells of the different standards; and
performing an inter-network collaboration operation according to the coordination indication information.

13. The method according to claim 12, wherein before the receiving coordination indication information sent by a collaboration node, the method further comprises:
periodically sending the status information to the collaboration node; or
sending the status information to the collaboration node when a radio resource status changes; or
receiving a request message for requesting the status information, which is sent by the collaboration node, and sending, by responding to the request message, the status information to the collaboration node.

14. The method according to claim 12 or 13, wherein before the receiving coordination indication information sent by a collaboration node, the method further comprises:
finding the collaboration node and establishing a connection with the collaboration node.

15. The method according to any one of claims 12 to 14, wherein the coordination indication information comprises at least one of a neighboring cell parameter, a handover threshold, a camping parameter, a power parameter, and a load threshold; and
the receiving coordination indication information sent by a collaboration node comprises:
receiving, by base stations or base station controllers of the cells of the different standards, the coordination indication information, which is sent by the collaboration node when a utilization rate of radio resources of the cells of the different standards reaches a first preset threshold.

16. The method according to any one of claims 12 to 14, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold; and
the receiving coordination indication information sent by a collaboration node comprises:
receiving, by eNodeBs, the coordination indication information, which is sent by the collaboration node when a utilization rate of radio resources of a long term evolution LTE cell reaches a second preset threshold.

17. The method according to any one of claims 12 to 14, wherein the coordination indication information comprises a service bearer adjusting indication that is determined by the collaboration node according to at least one of a radio resource status, a user priority, and a service type of the cells of the different standards; and
the performing an inter-network collaboration operation according to the coordination indication information comprises:
adjusting service bearers according to the coordination indication information.

18. The method according to any one of claims 12 to 14, wherein the coordination indication information comprises frequency resources used by edge users and determined, according to load information of cells in an LTE system, by the collaboration node for a cell, of which load is higher than a preset threshold.

19. The method according to any one of claims 12 to 14, wherein the coordination indication information comprises indication information of shutting down cells of a part of frequency points or cells of a part of standards, or indication information of starting shut-down cells sent by the collaboration node according to load conditions of the cells of the different standards.

20. The method according to any one of claims 12 to 14, wherein the coordination indication information comprises almost blank subframe ABS configuration information that is determined by the collaboration node according to user service conditions of macro base stations and micro base stations of an LTE system.

21. The method according to any one of claims 12 to 14, wherein the coordination indication information comprises a non-conflict PCI that is determined by the collaboration node according to a PCI conflict condition of cells in an LTE system.

22. A collaboration node, comprising:
an obtaining module, adapted to obtain status information of cells of different standards, wherein the status information indicates at least one of a radio resource status, terminal distribution, and a service condition of the cells of the different standards; and
a sending module, adapted to send, according to the status information, coordination indication information to base stations or base station controllers of the cells of the different standards, so that the base stations or the base station controllers perform an inter-network collaboration operation according to the coordination indication information.

23. The collaboration node according to claim 22, wherein the obtaining module is specifically adapted to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

24. The collaboration node according to claim 22 or 23, wherein the collaboration node further comprises:
a connection establishing module, adapted to find the base stations or the base station controllers and establish a connection with the base stations or the base station controllers.

25. The collaboration node according to any one of claims 22 to 24, wherein the coordination indication information comprises at least one of a neighboring cell parameter, a handover threshold, a camping parameter, a power parameter, and a load threshold; and
the sending module is specifically adapted to: if a utilization rate of radio resources of the cells of the different standards reaches a first preset threshold, send the coordination indication information to the base stations or the base station controllers.

26. The collaboration node according to any one of claims 22 to 24, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold; and
the sending module is specifically adapted to: if a utilization rate of radio resources of a long term evolution LTE cell reaches a second preset threshold, send the coordination indication information to eNodeBs.

27. The collaboration node according to any one of claims 22 to 24, wherein the sending module is specifically adapted to send, according to at least one of a radio resource status, a user priority, and a service type of the cells of the different standards, a service bearer adjusting indication to the base stations or the base station controllers, so that the cells of the different standards adjust service bearers.

28. The collaboration node according to any one of claims 22 to 24, wherein the sending module is specifically adapted to send, according to load information of cells in an LTE system, frequency resources used by edge users to a base station of a cell, of which load is higher than a preset threshold.

29. The collaboration node according to any one of claims 22 to 24, wherein the sending module is specifically adapted to send, according to load conditions of the cells of the different standards, indication information of shutting down cells of a part of frequency points or cells of a part of standards to the base stations or the base station controllers, or send indication information of starting shut-down cells to the base stations or the base station controllers.

30. The collaboration node according to any one of claims 22 to 24, wherein the sending module is specifically adapted to send, according to user service conditions of macro base stations and micro base stations of an LTE system, almost blank subframe ABS configuration information to the macro base stations or the micro base stations.

31. The collaboration node according to any one of claims 22 to 24, wherein the sending module is specifically adapted to send, according to a PCI conflict condition of cells in an LTE system, a non-conflict PCI to a base station of a PCI-conflicting cell.

32. The collaboration node according to any one of claims 22 to 31, wherein the collaboration node further comprises:
a configuring module, adapted to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

33. A network side device, wherein the network side device is a base station or a base station controller of a cell of a different standard, and comprises:
a receiving module, adapted to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and
an executing module, adapted to perform an inter-network collaboration operation according to the coordination indication information.

34. The network side device according to claim 33, wherein the network side device further comprises:
a sending module, adapted to periodically send the status information to the collaboration node, or send the status information to the collaboration node when a radio resource status changes, or send, by responding to a request message, requesting the status information, of the collaboration node, the status information to the collaboration node.

35. The network side device according to claim 33 or 34, wherein the network side device further comprises:
a connection establishing module, adapted to find the collaboration node and establish a connection with the collaboration node.

36. The network side device according to any one of claims 33 to 35, wherein the coordination indication information comprises at least one of a neighboring cell parameter, a handover threshold, a camping parameter, a power parameter, and a load threshold; and
the receiving module is specifically adapted to receive the coordination indication information, which is sent by the collaboration node when a utilization rate of radio resources of the cells of the different standards reaches a first preset threshold.

37. The network side device according to any one of claims 33 to 35, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold;
the network side device is an eNodeB; and
the receiving module is specifically adapted to receive the coordination indication information, which is sent by the collaboration node when a utilization rate of radio resources of a long term evolution LTE cell reaches a second preset threshold.

38. The network side device according to any one of claims 33 to 35, wherein the coordination indication information comprises a service bearer adjusting indication that is determined by the collaboration node according to at least one of a radio resource status, a user priority, and a service type of the cells of the different standards; and
the executing module is specifically adapted to adjust service bearers according to the coordination indication information.

39. The network side device according to any one of claims 33 to 35, wherein the coordination indication information comprises frequency resources used by edge users and determined, according to load information of cells in an LTE system, by the collaboration node for a cell, of which load is higher than a preset threshold.

40. The network side device according to any one of claims 33 to 35, wherein the coordination indication information comprises indication information of shutting down cells of a part of frequency points or cells of a part of standards, or indication information of starting shut-down cells sent by the collaboration node according to load conditions of the cells of the different standards.

41. The network side device according to any one of claims 33 to 35, wherein the coordination indication information comprises almost blank subframe ABS configuration information that is determined by the collaboration node according to user service conditions of macro base stations and micro base stations of an LTE system.

42. The network side device according to any one of claims 33 to 35, wherein the coordination indication information comprises a non-conflict PCI that is determined by the collaboration node according to a PCI conflict condition of cells in an LTE system.

43. A collaboration node, comprising:
a receiver, configured to obtain status information of cells of different standards, wherein the status information indicates at least one of a radio resource status, terminal distribution, and a service condition of the cells of the different standards;
a processor, configured to determine coordination indication information according to the status information; and
a sender, configured to send the coordination indication information to base stations or base station controllers of the cells of the different standards, so that the base stations or the base station controllers perform an inter-network collaboration operation according to the coordination indication information.

44. The collaboration node according to claim 43, wherein the receiver is specifically configured to receive the status information periodically sent by the base stations or the base station controllers, or receive the status information that is sent by the base stations or the base station controllers when a radio resource status changes, or receive the status information sent, by responding to a request message, requesting the status information, of the collaboration node, by the base stations or the base station controllers.

45. The collaboration node according to claim 43 or 44, wherein the processor is further configured to find the base stations or the base station controllers and establish a connection with the base stations or the base station controllers.

46. The collaboration node according to any one of claims 43 to 45, wherein the coordination indication information comprises at least one of a neighboring cell parameter, a handover threshold, a camping parameter, a power parameter, and a load threshold; and
the processor is specifically configured to: if a utilization rate of radio resources of the cells of the different standards reaches a first preset threshold, determine the coordination indication information.

47. The collaboration node according to any one of claims 43 to 45, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold;
the processor is specifically configured to: if a utilization rate of radio resources of a long term evolution LTE cell reaches a second preset threshold, determine the coordination indication information; and
the sender is specifically configured to send the coordination indication information to eNodeBs.

48. The collaboration node according to any one of claims 43 to 45, wherein the processor is specifically configured to determine a service bearer adjusting indication according to at least one of a radio resource status, a user priority, and a service type of the cells of the different standards; and
the sender is specifically configured to send the service bearer adjusting indication to the base stations or the base station controllers, so that the cells of the different standards adjust service bearers.

49. The collaboration node according to any one of claims 43 to 45, wherein the processor is specifically configured to determine, according to load information of cells in an LTE system, frequency resources used by edge users of a cell, of which load is higher than a preset threshold; and
the sender is specifically configured to send the frequency resources used by the edge users to a base station of the cell, of which the load is higher than the preset threshold.

50. The collaboration node according to any one of claims 43 to 45, wherein the processor is specifically configured to determine, according to load conditions of the cells of the different standards, indication information of shutting down cells of a part of frequency points or cells of a part of standards, or indication information of starting shut-down cells; and
the sender is specifically configured to send the indication information of shutting down cells of a part of frequency points or cells of a part of standards to the base stations or the base station controllers, or send the indication information of starting shut-down cells to the base stations or the base station controllers.

51. The collaboration node according to any one of claims 43 to 45, wherein the processor is specifically configured to determine, according to user service conditions of macro base stations and micro base stations of an LTE system, almost blank subframe ABS configuration information; and
the sender is specifically configured to send the ABS configuration information to the macro base stations or the micro base stations.

52. The collaboration node according to any one of claims 43 to 45, wherein the processor is specifically configured to determine, according to a PCI conflict condition of cells in an LTE system, a non-conflict PCI for a PCI-conflicting cell; and
the sender is specifically configured to send the non-conflict PCI to a base station of the PCI-conflicting cell.

53. The collaboration node according to any one of claims 43 to 52, wherein the processor is further configured to configure a GSM or UMTS neighboring cell relationship according to an LTE neighboring cell relationship, or configure a UMTS or LTE neighboring cell relationship according to a GSM neighboring cell relationship, or configure a GSM or LTE neighboring cell relationship according to a UMTS neighboring cell relationship.

54. A network side device, wherein the network side device is a base station or a base station controller of a cell of a different standard, and comprises:
a receiver, configured to receive coordination indication information sent by a collaboration node, where the coordination indication information is determined by the collaboration node according to status information of cells of different standards, and the status information indicates at least one of a radio resource status, terminal distribution, and a service condition of the cells of the different standards; and
a processor, configured to perform an inter-network collaboration operation according to the coordination indication information.

55. The network side device according to claim 54, wherein the network side device further comprises:
a sender, configured to periodically send the status information to the collaboration node, or send the status information to the collaboration node when a radio resource status changes, or send, by responding to a request message, requesting the status information, of the collaboration node, the status information to the collaboration node.

56. The network side device according to claim 54 or 55, wherein the processor is further configured to find the collaboration node and establish a connection with the collaboration node.

57. The network side device according to any one of claims 54 to 56, wherein the coordination indication information comprises at least one of a neighboring cell parameter, a handover threshold, a camping parameter, a power parameter, and a load threshold; and
the receiver is specifically configured to receive the coordination indication information, which is sent by the collaboration node when a utilization rate of radio resources of the cells of the different standards reaches a first preset threshold.

58. The network side device according to any one of claims 54 to 56, wherein the coordination indication information comprises at least one of a physical cell identity PCI of an evolved base station eNodeB, a random access channel RACH sequence of an eNodeB, a neighboring cell parameter, a handover threshold, a camping parameter, a power parameter, and a load threshold;
the network side device is an eNodeB; and
the receiver is specifically configured to receive the coordination indication information, which is sent by the collaboration node when a utilization rate of radio resources of a long term evolution LTE cell reaches a second preset threshold.

59. The network side device according to any one of claims 54 to 56, wherein the coordination indication information comprises a service bearer adjusting indication that is determined by the collaboration node according to at least one of a radio resource status, a user priority, and a service type of the cells of the different standards; and
the processor is specifically configured to adjust service bearers according to the coordination indication information.

60. The network side device according to any one of claims 54 to 56, wherein the coordination indication information comprises frequency resources used by edge users and determined, according to load information of cells in an LTE system, by the collaboration node for a cell, of which load is higher than a preset threshold.

61. The network side device according to any one of claims 54 to 56, wherein the coordination indication information comprises indication information of shutting down cells of a part of frequency points or cells of a part of standards, or indication information of starting shut-down cells sent by the collaboration node according to load conditions of the cells of the different standards.

62. The network side device according to any one of claims 54 to 56, wherein the coordination indication information comprises almost blank subframe ABS configuration information that is determined by the collaboration node according to user service conditions of macro base stations and micro base stations of an LTE system.

63. The network side device according to any one of claims 54 to 56, wherein the coordination indication information comprises a non-conflict PCI that is determined by the collaboration node according to a PCI conflict condition of cells in an LTE system.
